(19) Europäisches Patentamt
European Patent Office
Office européen des brevets

(11) Veröffentlichungsnummer: **0 083 682**
**A2**

(12) # EUROPÄISCHE PATENTANMELDUNG

(21) Anmeldenummer: 82105151.3

(22) Anmeldetag: 12.06.82

(51) Int. Cl.³: **H 01 M 6/18**

(30) Priorität: 13.01.82 DE 3200757

(43) Veröffentlichungstag der Anmeldung: 20.07.83 Patentblatt 83/29

(84) Benannte Vertragsstaaten: BE DE FR GB IT NL

(71) Anmelder: Firma Carl Freudenberg
Höhnerweg 2
D-6940 Weinheim/Bergstrasse(DE)

(72) Erfinder: Hartwig, Peter, Dr.
Hohensachsenerstrasse 21
D-6945 Hirschberg(DE)

(72) Erfinder: Leising, Erich, Dr.
Kriemhildstrasse 26
D-6940 Weinheim(DE)

(72) Erfinder: Freudenberg, Bertram, Dr.
Hausackerweg 10
D-6940 Weinheim(DE)

(72) Erfinder: Kändler, Joachim, Dr.
Am Michelsgrund 12
D-6940 Weinheim(DE)

(74) Vertreter: Weissenfeld-Richters, Helga, Dr.
Höhnerweg 2
D-6940 Weinheim/Bergstrasse(DE)

(54) **Flexible elektrochemische Zelle.**

(57) Flexible elektrolytische Zelle, bestehend aus zwei Elektroden und einem dazwischen angeordneten festen Elektrolyten, wobei der Elektrolyt filmartig ausgestattet ist und wenigstens der Elektrolyt und gegebenenfalls auch eine oder beide Elektroden in ein gummielastisches Material eingearbeitet sind. Das gummielastische Material ist weichmacherfrei und der feste Elektrolyt ist eine lithiumhaltige Verbindung.

EP 0 083 682 A2

0083682

DR. H. WEISSENFELD - RICHTERS
PATENTANWÄLTIN

6940 Weinheim/Bergstr.
Höhnerweg 2 - 4
Telefon 06201 - 80-4494 + 8618
Telex 4 65 531

7. Juni 1982
Dr. W/Sch ON 959/Europa



Anmelderin: Firma Carl Freudenberg, Weinheim

BEZEICHNUNG GEÄNDERT
siehe Titelseite

Flexible elektrolytische Zelle

Die Erfindung betrifft eine flexible elektrolytische Zelle, bestehend aus zwei Elektroden und einem dazwischen angeordneten festen Elektrolyten, wobei der Elektrolyt filmartig ausgestaltet ist.

DE-OS 2o 22 456 und DE-OS 2o 22 519 beschreiben flexible Elektrolyten bzw. flexible elektrolytische Zellen, bei denen der Elektrolyt in ein filmbildendes Material eingebettet ist. Gegenüber den gelförmigen Elektrolyten stellt diese Ausführung einen großen Fortschritt dar, die Elektroden sind jedoch nicht beliebig einzusetzen, denn das filmbildende Material muß einen Weichmacher enthalten, damit es die notwendige Biegsamkeit aufweist. Es besteht die Gefahr, daß der Weichmacher beim Lagern aus dem sehr dünnen Film heraus diffundiert, wodurch dieser brüchig wird und die Leitfähigkeit infolge von Rissen mehr oder weniger stark absinkt. Elektrolytfilme nach den vorstehend genannten Offenlegungsschriften lassen sich überdies nur mit Silberverbindungen als Festelektrolyt herstellen, weil diese gegenüber den filmbildenden organischen Verbindungen und dem Weichmacher indifferent reagieren. Silbersalze als Festelektrolyte sind für viele Fälle brauchbar, jedoch sind sie relativ schwer und überdies kostspielig. Bei extrem leichten Knopfzellen macht sich das hohe Gewicht des Silbers sehr nachteilig bemerkbar.

Zur Herstellung leichter elektrolytischer Zellen sind auch schon andere Festelektrolyte vorgeschlagen worden. So haben sich z.B. Lithiumverbindungen außerordentlich gut bewährt. Lithiumverbindungen lassen sich aber nicht in filmbildende Substanzen gemäß DE-OS 2o 22 456 oder DE-OS 2o 22 519 einbetten, weil eine Reaktion mit dem Filmbildner und den Weichmachern eintreten würde, so daß derartige elektrolytische Zellen sich innerhalb kürzester Zeit zersetzen.

Da Lithiumverbindungen für leichte Batterien besonders bewährt sind, hat man sich bisher dadurch geholfen, daß der Elektrolyt in gepreßter Form und möglichst dünner Schichtstärke eingesetzt wird. Eine möglichst dünne Schichtstärke ist deshalb erwünscht, weil die Dicke des Elektrolyten proportional dem ionischen Widerstand der Schicht ist. Beim Verpressen der Lithiumverbindungen oder sonstiger geeigneter Festelektrolyte erhält man jedoch abhängig von der Unterlage und dem Preßdruck nur bedingt dünne Schichten. Schichtdicken kleiner als etwa 1oo $\mu m$ sind nicht lochfrei zu erreichen. Bei einem Elektrolytwiderstand von $10^6\ \Omega/cm^2$ erhält man theoretisch einen spezifischen Widerstand von $10^4\ \Omega/cm^2$ wenn die Stärke der Schicht 1oo $\mu m$ beträgt. Dieser Wert läßt sich jedoch praktisch nicht erreichen, weil kein Preßgrad von 1oo % vorliegt und außerdem Korngrenzenwiderstände auftreten. Ein Widerstand von $10^4\Omega/cm^2$ ist für viele Anwendungen bereits zu hoch, zumal der Gesamtwiderstand einer Zelle noch zusätzlich alle Widerstände in den Elektroden enthält.

Da die Herstellung flacher Schichten durch Pressen somit sehr aufwendig ist und die Erzeugung von Rundzellen mit der Wickeltechnik überhaupt nicht möglich erscheint, besteht ein großes Bedürfnis nach flexiblen elektrolytischen Zellen, die einerseits sehr leicht sind, d.h. Lithiumverbindungen als festen Elektrolyten enthalten sollen, und andererseits eine dünne Schichtdicke von weniger als 1oo $\mu m$ aufweisen sollen. Es wird angestrebt, daß ein kleiner Biegeradius von weniger als 1 mm eingehalten werden kann. Der Erfindung liegt die Aufgabe zugrunde, flexible elektrolytische Zellen zu entwickeln, die den vorstehend geschilderten Anforderungen entsprechen.

Die Aufgabe wird gelöst durch die in den Patentansprüchen wiedergegebenen flexiblen elektrolytischen Zellen aus zwei Elektroden und einem dazwischen angeordneten Festelektrolyten, wobei der Elektrolyt und gegebenenfalls auch die Elektroden biegsam sind. Das filmbildende Material ist weichmacherfrei und mit den angewandten Lithiumverbindungen als Elektrolyt verträglich.

Die elektrolytischen Zellen zeichnen sich durch eine außerordentlich geringe Selbstentladung aus. Diese beträgt höchstens 1 bis 2 % pro Jahr. Daraus ergibt sich eine erheblich verlängerte Lagerfähigkeit im Vergleich z.B. mit herkömmlichen Silberverbindungen als Elektrolytsubstanz.

Der Elektrolytfilm weist Schichtdicken unter loo $\mu$m, in der Regel etwa lo - loo $\mu$m auf. Die Filme werden bevorzugt aus einer Suspension der Lithiumverbindung mit dem elastischen Material hergestellt. Es liegt auf der Hand, daß derartige Festelektrolyte in sehr dünnen Filmen hergestellt werden können, so daß die Flexibilität ausreicht um die Zellen zu biegen oder zu wickeln, wobei der Biegeradius kleiner als 1 mm sein kann. Die elektrolytischen Zellen können auch in spiralförmigen, s-förmigen oder sonstwie gebogenen Anordnungen verwendet werden.

Die festen Elektrolyte auf Lithiumbasis sind homogene anorganische Stoffe. Ganz besonders bevorzugt wird die Verbindung $Li_9N_2Cl_3$. Darüber hinaus lassen sich mit großem Vorteil weitere Lithiumverbindungen verarbeiten. Bewährt haben sich insbesondere Lithiumverbindungen, die in DE-OS 29 ol 3o3 und DE-OS 29 18 94o beschrieben werden. Die Lithiumverbindungen lassen sich in beliebiger Menge in den filmbildenden Träger einarbeiten, wobei lediglich darauf zu achten ist, daß die erforderliche Flexibilität erreicht wird.

In diesem Zusammenhang werden bevorzugt Mengen zwischen 1 : 2o bis 1 : 1 (gummielastisches Material : Elektrolyt) verwendet). Die untere Grenze bei der Einarbeitung des Elektrolyten liegt bei einem solchen Mengenverhältnis, daß keine Fehlstellen bezüglich des leitenden Materials eintreten. In diesem Falle würde keine einwandfreie Leitung mehr möglich sein. Die obere Gewichtsmenge ist durch die dann nicht mehr ausreichende Flexibilität gegeben. Es ist wichtig, daß das gummielastische Material, in welches der feste Elektrolyt eingebettet wird, keine elektronisch leitenden Verbindungen enthält, weil sonst ein Kurzschluß im Elektrolyten auftreten würde. In diesem Sinne sind auch neben den anderen Nachteilen die früher als erforderlich erachteten Weichmacher unerwünscht.

Der feste Elektrolyt auf Lithiumbasis wird in das gummielastische Material z.B. aus einer Suspension oder durch Verpressen eingearbeitet. Das gummielastische Material muß weichmacherfrei und frei von elektronisch leitenden Verbindungen sein. Es liegt auf der Hand, daß es gegenüber den eingesetzten Lithiumverbindungen resistent sein muß. Bewährt haben sich Polyolefine, insbesondere Polyisobutylen. Sehr zweckmäßig sind auch ataktische Polypropylene und Polyäthylene, die die erforderliche Flexibilität aufweisen. Es ist weiterhin Kautschuk brauchbar, der entsprechend gereinigt ist sowie ganz besonders Polyisopren. Es lassen sich weiterhin halogenierte, z.B. chlorierte Polyolefine verwenden sowie Polystyrolhomologe. Auch hier sind solche Stoffe auszuwählen, die die erforderliche Elastizität aufweisen.

Filmbildende Substanzen gemäß DE-OS 2o 22 456 und DE-OS 2o 22 519 sind unbrauchbar, weil die dort genannten Stoffe mit den Lithiumverbindungen reagieren und die elektrolytische Zelle innerhalb kürzester Zeit zerstören würden. Überdies ist die Mitverwendung von Weichmachern empfohlen, was erfindungsgemäß unerwünscht ist.

Die erfindungsgemäß vorgeschlagene flexible elektrolytische Zelle erlaubt es nahezu beliebig dünne Schichten der Batteriekomponenten herzustellen. Selbst bei Biegeradien von weniger als 1 mm brechen die Zellen nicht. Entsprechendes gilt auch für die Elektrodenschicht. Der Widerstand der Elektrolytschicht nimmt bei den erfindungsgemäßen Zellen nur um etwa den Faktor 2 gegenüber reinem Elektrolyten zu. Da jedoch Schichten erreichbar sind, die bis zu einem Faktor 5 dünner als reine gepreßte Elektrolytschichten sind, kann dies ohne weiteres in Kauf genommen werden.

Die vorgeschlagenen elektrolytischen Zellen sind für alle festen Batteriekomponenten anwendbar. Die Auswahl des elastomeren Stoffes richtet sich wie erwähnt nach der chemischen Stabilität des Elastomeren und der Batteriekomponente.

Es lassen sich absolut auslaufsichere Allfeststoffzellen herstellen, wobei keine oder nur geringe Korrosionsprobleme auftreten. Die Zellen sind extrem lange lagerfähig. Es tritt keine Desaktivierung des Elektrodenmaterials auf.

Die erfindungsgemäß vorgeschlagene Form der flexiblen elektrolytischen Zellen ergibt zahlreiche neue Anwendungsmöglichkeiten für Festelektrolyten.

Nachfolgend werden beispielhafte Ausführungen der erfindungsgemäßen flexiblen elektrolytischen Zellen wiedergegeben:

Beispiel 1

Ein Gewichtsteil Polyisobutylen (mittleres Molekulargewicht o,4 x 1o$^{6}$), z.B. Oppanol B 5o (Handelsprodukt der BASF AG) werden in 2o Gewichtsteilen Toluol gelöst. Anschließend werden 1o,24 Gewichtsteile $Li_9N_2Cl_3$ als Festelektrolyt zugegeben und die Suspension in einer Pulvermühle 3o Minuten vermahlen. Die Korngröße des Elektrolytmaterials liegt unter 1o µm.

Die Suspension wird in wasserfreier Atmosphäre auf eine PTFE-Platte aufgerakelt und das Lösungsmittel verdunstet. Es entsteht eine lösungsmittelfreie Schicht, die von der PTFE-Platte abgehoben und weiterverarbeitet werden kann. Durch übliche Verfahren, z.B. Stanzen, Schneiden oder Verpressen wird ein Elektrolytfilm erhalten, dessen Schichtdicke z.B. durch das Rakel von 1o-5oo µm einstellbar ist.

Beispiel 2

Ein Gewichtsteil ataktisches Polypropylen werden in 5o Gewichtsteilen Petrolbenzin (Siedepunkt 5o-7o °C) gelöst. Zu der Lösung werden 3o Gewichtsteile LiJ gegeben und die Mischung weiterverarbeitet wie in Beispiel 1 beschrieben.

Beispiel 3

Ein Gewichtsteil Polyisobutylen (mittleres Molekulargewicht 3 x $1o^6$), z.B. Oppanol B 15o (Handelsprodukt der BASF AG) werden in 5o Gewichtsteile Xylol gelöst. Dazu werden 26 Gewichtsteile $Li_9N_2Cl_3$ gegeben und die Mischung weiterverarbeitet wie in Beispiel 1 beschrieben.

Beispiel 4

Ein Gewichtsteil Polyisobutylen (mittleres Molekulargewicht o,4 x $1o^6$),z.B. Oppanol B 5o (Handelsprodukt der BASF AG) werden in 3o Gewichtsteilen Tetrachlormethan gelöst. Anschließend werden 9,2 Gewichtsteile $MnO_2$ und o,8 Gewichtsteile Graphit suspendiert und vermahlen. Die entstehende Suspension wird auf einer metallischen Unterlage aufgerakelt und abtrocknen lassen. Auf das so gebildete Elektrodenmaterial wird anschließend entsprechend Beispiel 1 eine feste Elektrolytschicht aufgebracht. Man erhält so direkt eine Verbindung von Elektrode und Elektrolyt in engem Kontakt übereinander. Die Elektrolytschicht kann nun mit Lithium beaufschlagt werden und man erhält so das vollständige Batteriesystem.

Beispiel 5

In einem Kneter werden 2o Gewichtsteile ataktisches Polypropylen und 18o Gewichtsteile LiJ gemischt und anschließend auf einem Walzwerk zu einem Fell gewalzt.

Je nach Einstellung des Walzwerkes erhält man ein Fell von 4o-3oo µm Stärke, das direkt weiterverarbeitet werden kann.

Beispiel 6

Von den nach Beispiel 1 bis 5 hergestellten Schichten werden Formen gestanzt, Lithium als Elektrode aufgebracht und der innere Widerstand der Zellen vermessen.

Die nachstehende Tabelle 1 enthält die Werte der erfindungsgemäß aufgebauten Zellen im Vergleich zu herkömmlichen nach bekannten Preßverfahren ohne gummielastisches Material aufgebauten elektrolytischen Zellen. Tabelle 1 zeigt bei den Proben 1 bis 3 elektrolytische Zellen mit Elektroden aus Lithium und Kupfersulfid. Bei den Proben 4 und 5 sind Zellen mit Lithium und $MnO_2$ als Elektrolyt wiedergegeben. Die Probe 1 und 4 jeweils sind herkömmliche nach dem Preßverfahren hergestellte Zellen, während die Proben 2, 3 und 5 erfindungsgemäße flexible elektrolytische Zellen darstellen.

Aus den Widerständen der Zellen ergibt sich deutlich der Vorteil der erfindungsgemäßen Elektrolytschichten gegenüber herkömmlichen Zellen.

Tabelle 1

| | R (k$\Omega$) | U (V) |
|---|---|---|
| Li/15o $\mu$m $Li_9N_2Cl_3$ gepreßt/CuS | 2,8 | 2,71 |
| Li/4o $\mu$m $Li_9N_2Cl_3$, 5,5 % Polyisobutylen (M = o,4 x $1o^6$)/CuS | 1,5 | 2,72 |
| Li/3o $\mu$m $Li_9N_2Cl_3$, 4,o % Polyisobutylen (M = 3 x $1o^6$)/CuS | 1,1 | 2,74 |
| Li/2oo $\mu$m $Li_9N_2Cl_3$ gepreßt/$MnO_2$ | 5o | 3,o5 |
| Li/5o $\mu$m $Li_9N_2Cl_3$, 4,7 % Polyisobutylen (M = o,4 x $1o^6$)/$MnO_2$ | 15 | 3,15 |

Patentansprüche

1. Flexible elektrolytische Zelle, bestehend aus zwei Elektroden und einem dazwischen angeordneten festen Elektrolyten, wobei der Elektrolyt filmartig ausgestattet ist, dadurch gekennzeichnet, daß wenigstens der Elektrolyt und gegebenenfalls eine oder beide Elektroden in ein gummielastisches Material eingearbeitet ist bzw. sind und der Elektrolyt eine lithiumhaltige Verbindung ist.

2. Zelle nach Anspruch 1, dadurch gekennzeichnet, daß das gummielastische Material weichmacherfrei ist und eine biegsame, gegenüber den lithiumhaltigen Verbindungen stabile Substanz ist.

3. Zelle nach einem der Ansprüche 1 oder 2, dadurch gekennzeichnet, daß das gummielastische Material ein Polyolefin, ein halogeniertes, z.B. chloriertes oder fluoriertes Polyolefin und/oder ein Polystyrolhomologes ist.

4. Zelle nach Anspruch 3, dadurch gekennzeichnet, daß das gummielastische Material ataktisches Polypropylen oder Polyäthylen ist.

5. Zelle nach Anspruch 3, dadurch gekennzeichnet, daß das gummielastische Material Polyisobutylen ist.

6. Zelle nach einem der Ansprüche 1 bis 5, dadurch gekennzeichnet, daß der Elektrolyt eine lithiumhaltige Verbindung der allgemeinen Formel

$$Li_{3u + 2v + w}X_u Y_v Z_w$$

enthält.

in der

X Stickstoff, Phosphor und/oder Arsen,

Y Sauerstoff, Schwefel, Tellur und/oder Selen,

Z Wasserstoff und/oder Halogen und

u, v, w je eine Zahl von o bis 1 einschließlich bedeuten, mit der Maßgabe, daß nur eine der Zahlen u. v, w den Wert o annehmen kann.

7. Zelle nach einem der Ansprüche 1 bis 5, dadurch gekennzeichnet, daß es als Elektrolyten eine lithiumhaltige Verbindung der allgemeinen Formel enthält

$$Li_{2-2x} N_{o,5-x} Hal_{o,5+x}$$

worin Hal Brom, Chlor, Fluor oder Jod und x eine Zahl von o bis o,2 bedeuten.

8. Zelle nach einem der Ansprüche 1 bis 5, dadurch gekennzeichnet, daß der Elektrolyt

$$Li_9N_2Cl_3$$

ist.

9. Zelle nach einem der Ansprüche 1 bis 8, dadurch gekennzeichnet, daß die flexiblen Schichten wenigstens ein Gewichtsprozent des gummielastischen Materials als Bindemittel enthalten.